# EUROPEAN PATENT APPLICATION

(11) **EP 0 608 587 A1**
(43) Date of publication of application: **03.08.1994**
(21) Application number: 93250033.3
(22) Date of filing: 27.01.1993
(51) Int. Cl.: H04B 7/26

(54) **Frequency selectin by quality measurement in a TDMA radio system with slots composed of trafic and probe portions**

(71) Applicant: ROCKWELL INTERNATIONAL CORPORATION, Richardson, Texas 75082-2402 (US)
(72) Inventor: Weddle, Daniel O., Plano, Texas 75075 (US); Young, David C., Richardson, Texas 75080 (US)
(74) Representative: UEXKÜLL & STOLBERG

(57) **Abstract**

A system for maintaining communication, including the use of suitable transmission frequencies, between two transceivers (A, B, C, C, E, n) having assigned time slots (T) for transmitting and receiving signals to and from each other on a time multiplexed basis, with the receiving (T6) and transmitting (T2) time slots each being comprised of two possibly separate portions (22,24; 18,20), includes a common time base (50) for the transmitting and receiving time slots at the transceivers. A first one of the transceivers (A) periodically transmits, after link-up of the transceivers, a traffic signal (56) having user data, in a traffic portion of the transmitting time slot, and a probe signal in a probe portion of the transmitting time slot, with the transmission frequencies of the traffic and probe signals usually being different. The second of the transceivers (B) receives the traffic and probe signals in corresponding receiving time slot portions. The second transceiver (B) analyzes the signal quality of the received traffic and probe signals and determines whether the transmission frequency of the received probe signal is suitable for transmission from the first transceiver (A) to the second transceiver (B) and possibly superior to the traffic signal frequency. The first transceiver (A) changes the transmission frequency of the probe signal, to explore additional frequencies suitable for transmission.

## Description

The present invention is related to a network of transceivers attempting communication in high frequency ranges which do not have stable propagation characteristics. More specifically, it is related to an approach which minimizes the time required to establish communications between two transceivers in a high frequency network.

Adaptive TDMA (time division multiple access) communication systems have been previously designed which dynamically maintain potentially different frequencies between nodes of the communication system using a process of communicating the quality of received signals between the nodes and storing this information so that an optimum frequency band can be selected, whereby whenever signal quality deteriorates, an alternate frequency can be selected to provide continued communications. An example of such a system is shown in an already issued U.S. Patent #4,937,822, dated 26 June, 1990, and assigned to the same assignee as the present invention. The system outlined in the referenced patent utilized a connectivity phase which could only start a connectivity process on twelve minute intervals distributed at predetermined times throughout the day, and the process used required checking each of a number of prospective frequencies before deciding which signal would be appropriate to use in initial communications. Thus, there would be times when a start-up would be attempted immediately after the occurrence of a twelve minute start time interval thereby preventing start-up for almost 24 minutes even when propagation characteristics were favorable. If, in fact, propagation characteristics were unfavorable and other sets of potential frequencies needed to be tried, the connection process could take much longer than could be tolerated in a practical operating environment where nodes of the network need, for some reason or another, to be off-line from time to time and then need to suddenly access the system.

This long start-up problem is addressed by the present invention in accordance with the following parameters. Each of the nodes operates from a precise clock as was the case in the referenced patent. Further, each of the nodes use a common algorithm such that each node knows exactly what frequency would be attempted by a given neighbor node if that neighbor node were to be transmitting at that time. Thus, each operating node continuously checks a set of frequencies for receipt of signal from other nodes, whether or not the other nodes are operating at that time, to see if start-up is commencing. Since each of the nodes transmits unique preamble signals that identify the source of the transmission, when a given node receives such a transmission identifiable as belonging to a previously assigned neighbor, that node henceforth provides information in transmissions to the node coming on line as to the frequency of the first signal heard, as long as the quality of the signal meets minimum standards of quality. As soon as both of the communicants have heard a signal from the other of the stated minimum quality, a connection is declared, and traffic data is transmitted as appropriate. The system continues to search for better frequencies (higher quality) to use in future traffic situations but in the meantime, traffic data can be delivered. The protocol of the present invention is such that half of each transmission and reception time is used for maintenance purposes in trying out new frequencies, and the other half is available for traffic data. Normally, the traffic data portion and the maintenance portion are at different frequencies, and both the traffic data portion and the maintenance portion are used to provide information to the receiving node as to the frequency to be used for future traffic data as well as the quality of signals received recently on the traffic frequencies. The present concept in typical situations has reduced the connectivity phase from as much as 12 to 24 minutes down to less than two minutes. Typical situations show a drastic improvement since the present invention can declare connectivity and start transmitting traffic data as soon as the new entry into the system (or a node which has lost synchronization for whatever reason) hears from an assigned neighbor and successfully transmits to that neighbor.

### BRIEF DESCRIPTION OF THE DRAWINGS

For a more complete understanding of the present invention and for further advantages thereof, reference is now made to the following Description of the Preferred Embodiments taken in conjunction with the accompanying Drawings in which:
Figure 1 provides a representation of a data bit stream from a given node to various neighbor nodes, and a further breakdown of the transmit and receive time slots of those communications. This basic protocol is used both in the prior art and the present invention;
Figure 2 illustrates the connectivity phase and timing cycle for the prior art approach at establishing communications;
Figure 3 illustrates the signal types used for maintenance and traffic communications in one embodiment of the present inventive concept;
Figure 4 provides a type of "flow diagram" illustrating the steps occurring in establishing a link-up between two nodes;
Figure 5 illustrates the steps involved in adapting to a new frequency for traffic data;
Figures 6 and 7 are used to illustrate the difference between the present inventive concept using the approach as basically described, and the possibly even faster link-up using a predictive frequency in the traffic portion of a time slot as a modification of the basic approach since the traffic portion is unused until a link-up is established;
Figure 8 is a block diagram of the components of a single node or transceiver in a network; and
Figure 9 comprises a high level flow diagram of the process involved by a node in establishing whether to transmit or receive and upon which frequencies and the data to be provided or detected.

### DESCRIPTION OF THE PREFERRED EMBODIMENTS

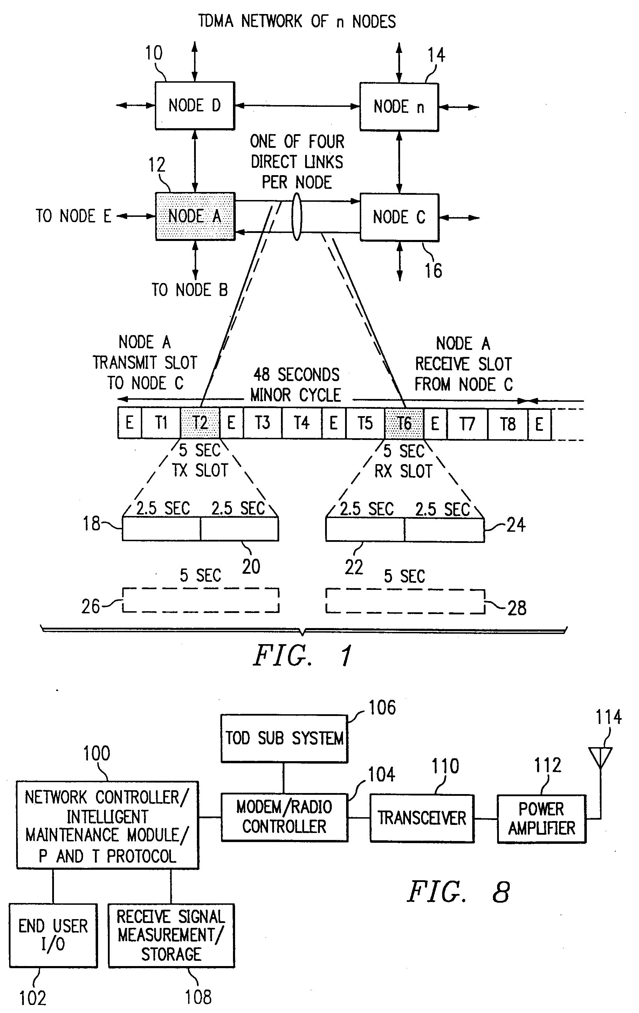

In Figure 1 a plurality of nodes 10, 12, 14 and 16 are shown comprising a portion of a TDMA network of N nodes. As designed in one embodiment of the concept, each node has the capability of directly contacting each of four other nodes in the network. A minor cycle, as illustrated below the nodes, comprises eight time slots. As shown, time slot T2 is used to transmit signals from node A to node C and time slot T6 is used for node A receiving signals from node C. Time slot T2 is broken down into two portions 18 and 20 while time slot T6 is broken down into portions 22 and 24. The five seconds designated as the time for time slot T2 is also typically broken into two 2.5 second time slots.

A dash line block 26 is shown representative of the fact that the entire time slot T2 may (on an exceptional basis in the present invention) be used for a single purpose such as delivery of traffic data. A similar dash line block 28 represents a long packet combination for the receive time slot T6.

As shown in Figure 1, there are four E or emergency time slots which are not pertinent to the present invention. The entire minor cycle thus requires 40 seconds for the assigned time slots T1 through T8, and eight additional seconds for the four emergency time slots. A minor cycle uses up 48 seconds of time.

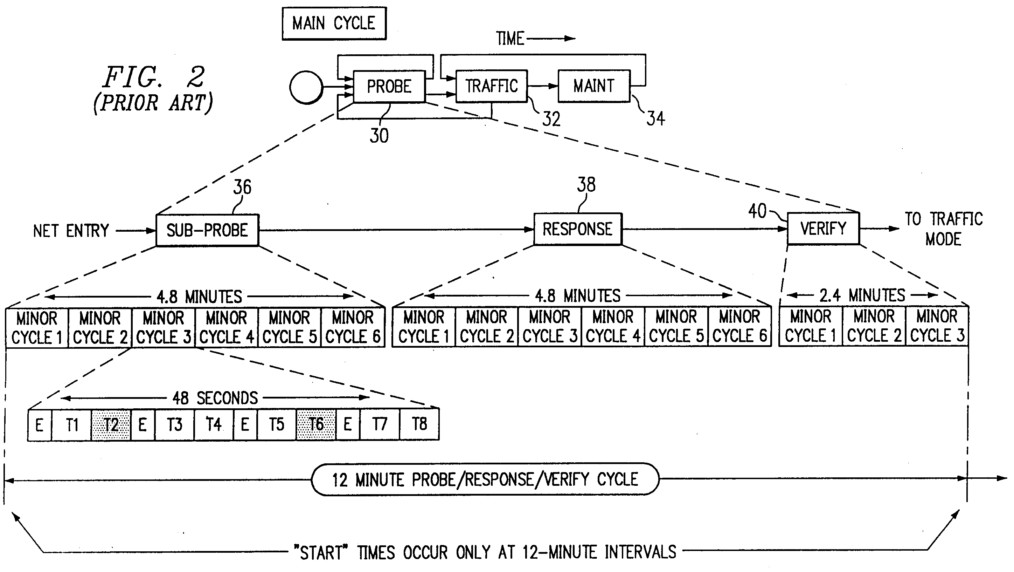

Figure 2 illustrates that the main cycle of the prior art communication link-up, traffic, and maintenance algorithm was separated into distinct modes with blocks 30, 32 and 34 representing respectively, the probe portion, traffic portion, and maintenance portions of a main cycle. The probe portion 30 was broken down into a sub-probe section 36, a response section 38, and a verify section 40. As will be noted, the sub-probe and response portions each required 4.8 minutes, and the verify portion required 2.4 minutes. Thus, the total time for sending out the various trial frequencies, checking the response, and verifying the information, consumed twelve minutes. The device would then proceed to the traffic mode with occasional temporary advances to a maintenance mode to update usable frequencies before returning to a traffic mode. This required that such a connectivity phase in the prior art system could only start at prescribed twelve minute intervals or five times per hour.

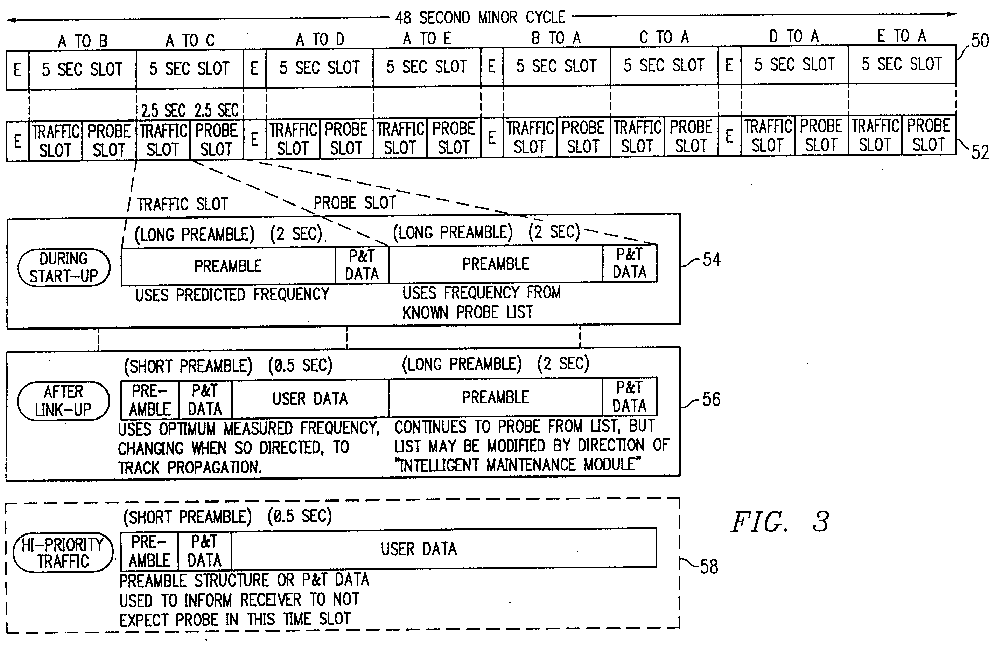

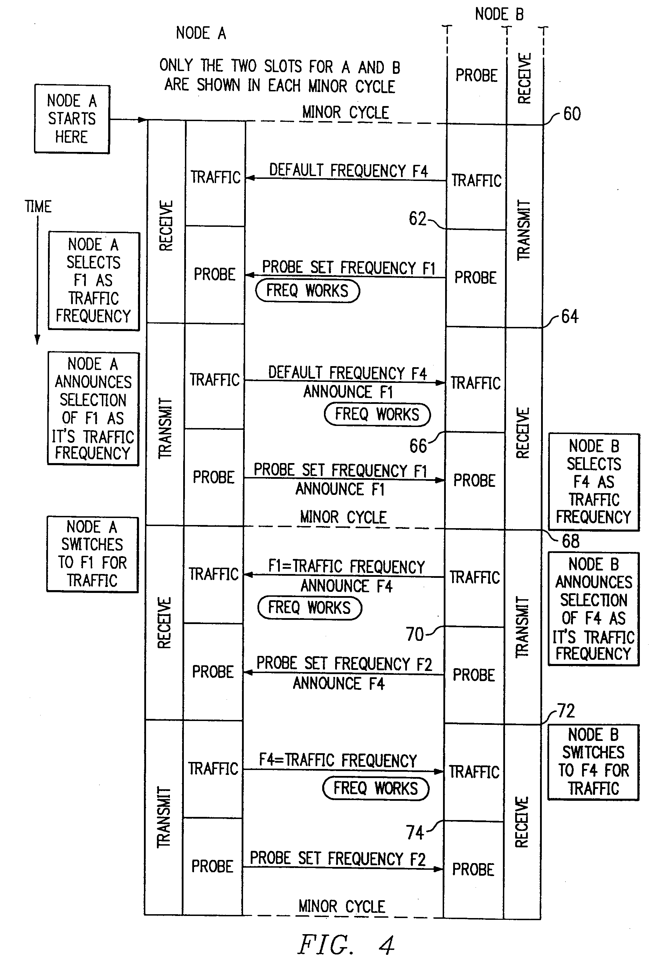

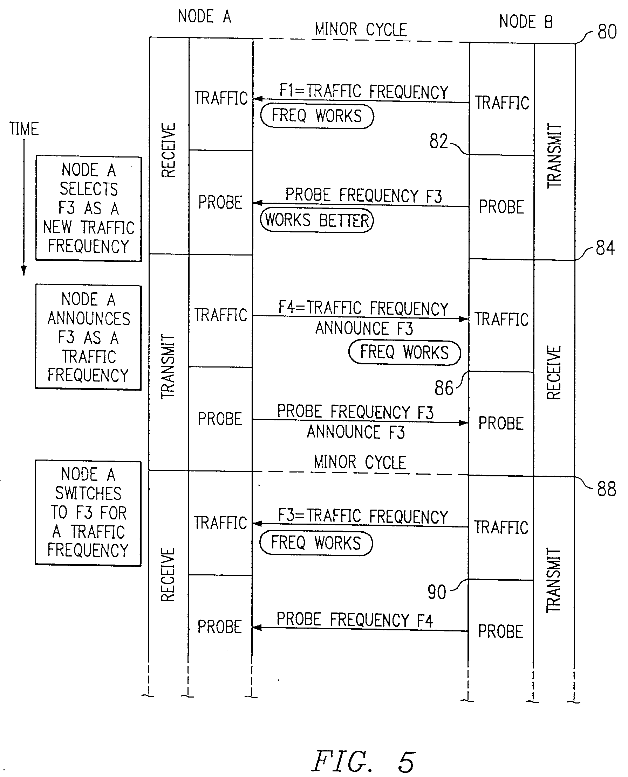

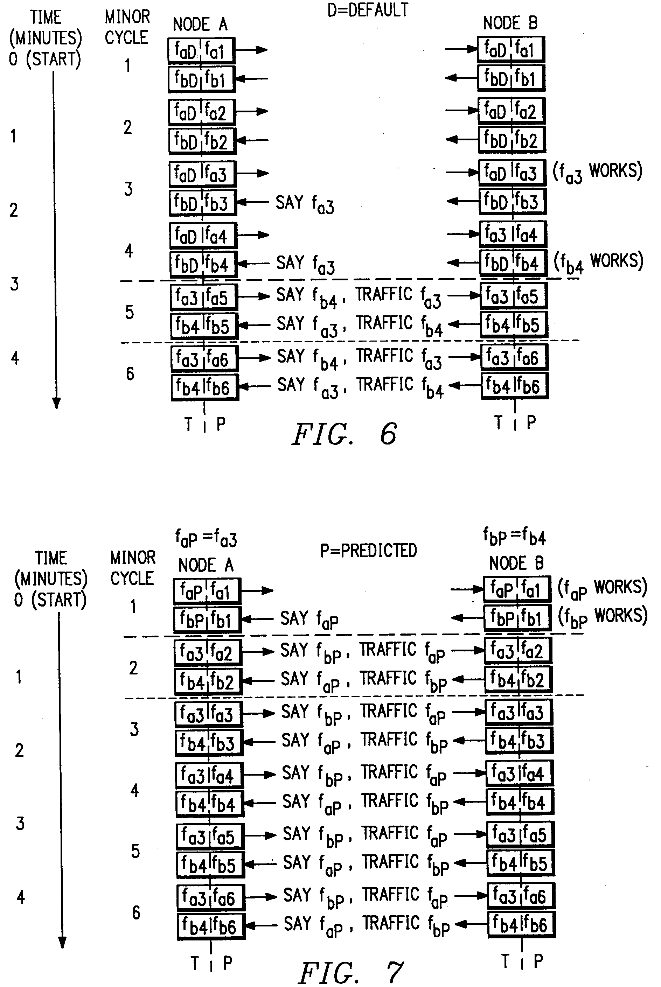

In Figure 3 a first waveform or timing representation 50 illustrates a minor cycle previously illustrated in Figure 1. It indicates that in the first four traffic slots node A transmits first to node B, then to node C, then to node D, and then to node E. In the last four traffic slots of the minor cycle, the node receives signals from B, C, D, and E. Timing representation 52 indicates that each of the five second time slots for transmission or reception is divided into a traffic slot, and a probe slot each of 2.5 seconds. A timing representation 54 expands upon timing representation 52 and shows, for a typical five second slot, that during start-up the traffic slot may have a two second or "long" preamble, and the remaining portion of the two and one-half second time slot contains probe and traffic (P&T) control data. The probe slot also has a long, two second preamble, and the remaining time comprises probe and traffic data identical to that in the traffic slot. The probe and traffic data in one embodiment of the invention, comprised a frequency index, an order wire index, an acknowledgement sequence number, whether or not the apparatus is in a start-up state, and link quality analysis information.

The frequencies used in the probe slot are taken from a list, which is maintained the same at all of the nodes. The nodes have the same frequency-time algorithm and are synchronized, so that pairs of them can switch to the same transmission/receive frequencies at designated times.

Until link-up is established, the traffic slot cannot be used to pass traffic data. A way of advantageously using this slot is to accomplish the functionality of the probe slot. The frequency for transmission in the traffic slot may be taken from a default frequency list known at both ends. The default frequencies may be selected one time by a designer of the system as the most likely to succeed frequency for the link or path type. An improvement is to use multiple default frequencies which are cycled through.

As a further improvement, the default frequency table may be modified by a prediction algorithm designed to use recent probe results to select the actual frequencies to be used in the traffic slot at the next occurrence of start-up. Such a modification could employ a prediction program whose accuracy (for the next 24 hours) can be greatly improved by measuring the channel propagation characteristics, in a manner similar to that done with the probe signals, and updating the model with the measured value of the highest frequency found to propagate. This would result in the model's input sun spot number being modified to force it to predict the MUF (maximum usable frequency) as measured. Once this pseudo sun spot number has been determined and exchanged between nodes, both affected transceivers will provide a prediction of the same frequency.

Timing representation 56 shows the composition of the time slot after link-up, with the traffic slot having a "short" or .28 second preamble, P&T control data, and then user (traffic) data. The probe time slot remains the same as it did during start-up. As indicated within box 56, the frequencies of the traffic slot use the optimum measured frequencies after link-up, and changes to new frequencies when so directed to track changes in propagation characteristics of the environment. The probe slot, on the other hand, after link-up, continues to probe at frequencies from a predetermined internal list, but in accordance with the overall algorithm of the invention, the list may be modified after link-up by direction of an intelligent maintenance module to be later discussed.

In Figure 4 information is presented as to communications between only nodes A and B at a time defined as 60. As illustrated, time is passing in a vertical direction down the figure. At the time indicated as 60, the node A is in a receive mode expecting signals from node B, and node B is accordingly in a transmit mode. As illustrated, a frequency F4, is transmitted at time 60, and at time 62 a probe frequency is transmitted at frequency F1. For the purposes of discussion, it may be assumed that propagation characteristics are such that node A receives the probe frequency F1 successfully (the received signal meets selected minimum quality standards), and due to propagation effects or whatever, the frequency F4 is not successfully received from node B by node A. Having successfully received on frequency F1, node A selects F1 at its traffic (receive) frequency. It now will set its receive frequency to F1 and announce the traffic frequency to node B. This decisive action is called by the inventors "announce-and-do." At time 64, later in the minor cycle, node A does transmit traffic on the frequency F4 announcing that it has successfully received frequency F1 or, in other words, that the frequency F1 works. Node B receives this message on frequency F4. At time 66, node A transmits a probe signal at frequency F1 announcing that it is able to successfully receive frequency F1 from B.

At this point in time, node A has successfully heard frequency F1, and node B has successfully heard frequency F4. Once node B can announce frequency F4 and set to receive on F4, both nodes can send traffic. During the next minor cycle starting at a time 68, node B uses the F1 traffic frequency to announce that frequency F4 works. Node A, which has switched to receive on frequency F1 for future traffic, successfully receives the message. At time 70 node B transmits a probe at frequency F2 announcing that F4 works, and as illustrated, the probe signal is not successfully received by node A, which is attempting in accordance with an internal algorithm to receive at frequency F2.

At time 72 node A transmits a traffic signal at frequency F4 in accordance with the received announcement at time 68, and node B receives the traffic at its traffic frequency F4. The next probe signal from node A to node B occurs at time 74. As illustrated, node B does not successfully receive this probe signal on frequency F2.

Figure 5 illustrates a situation where the node A adaptively changes its traffic receiving frequency. At time 80, node B transmits traffic on frequency F1 as previously set up in Figure 4. At time 82, node B transmits a probe on frequency F3 in accordance with an internal algorithm, and node A successfully receives the probe, and upon analysis, determines that the quality of the signal F3 is better than the quality of the signal received on frequency F1. At time 84 node A in its transmit condition uses the previously set traffic frequency F4 to announce to B that it wants to receive future traffic signals on F3. Node B receives this traffic signal successfully. At time 86 node A on its probe portion of the time slot announces frequency F3 as its desired frequency, and transmits on probe frequency F3. Node B does not successfully receive probe frequency F3 according to the illustration. At time 88 node B in a new minor cycle transmits traffic on F3 as opposed to the previous minor cycle where it used the previously set F1 for the traffic frequency. At this time, node A in its receive traffic portion of the time slot, uses F3 for the first time, and the frequency again works. Node B at time 90 transmits a probe on probe frequency F4 which is not successfully received by node A.

Figure 6 illustrates an example in which the time required to declare link-up is relatively long if it happens that the default frequencies used in the traffic time slot did not successfully propagate, and the first successful probe frequency is fa3 from node A to node B. As illustrated in minor cycle 4, probe fb4 is successfully received from node B by node A. Then, traffic can be sent in minor cycle 5. It must be realized that traffic being sent in minor cycle 5 immediately after both nodes have received successfully a probe signal from the other under the present "announce-and-do" approach, is, at the very least, one complete minor cycle faster than any known prior art. The prior art would typically have a required minimum minor cycle 5 to acknowledge successful receipt of a probe signal in both directions before being able to transfer usable traffic in minor cycle 6. The heavy dash line is an indication of the link-up capabilities in an "announce-and-do" mode presented by the present inventive concept, whereas the lighter dashed line between minor cycles 5 and 6 is an indication of the soonest possible declaration of link-up under prior art protocols.

Figure 7 further illustrates the same environmental conditions as confronted by the example of Figure 6, except that in this situation a predicted frequency is used in the first time slot as opposed to a default frequency. In the example shown, the predictive frequency happens to be equivalent to fa3 for node A, and happens to be equivalent to fb4 for node B. In such a situation, both nodes will receive the signal occurring in the traffic slot from the other node in the first minor cycle. Using the announce-and-do concept mentioned in connection with Figure 6, link-up is established by the end of minor cycle 1 and traffic can commence operation in minor cycle 2. On the other hand, even with predictive frequencies, if the minimum acknowledgement requirements of prior art approach is used, link-up could not be established prior to the end of minor cycle 2.

In Figure 7, since the predictive frequencies happen to be the same as frequencies fa3 and fb4, these frequencies are shown in the traffic slot in the remainder of the illustration. However, a further improvement on the concept as mentioned in connection with Figure 3 and elsewhere in this patent, indicates that the system would typically try to find multiple "best" traffic frequencies so that the traffic signals are continually cycled through a group of, say, two or three traffic frequencies, unless one frequency had significantly better quality than any other. Thus, the traffic frequencies shown on the left-hand side of each of node A and node B would be changing on a periodic basis in a preferred embodiment of the inventive concept.

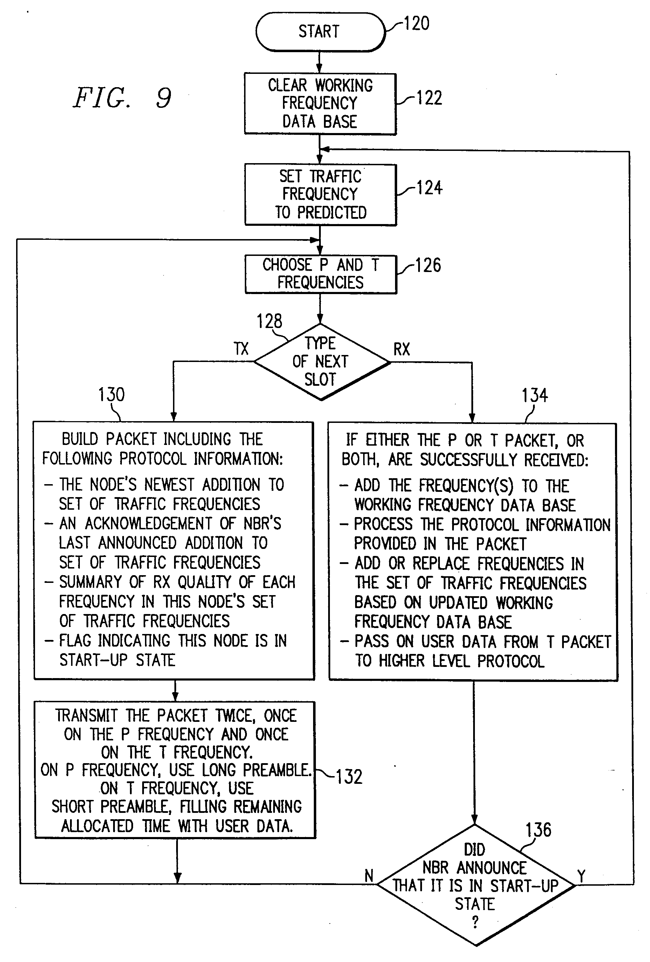

In Figure 8 a block 100 is shown as a combination network controller which implements the intelligent maintenance module and P & T protocol. It exchanges data with an end user I/O block 102 which could be something as simple as a keyboard and screen from which the operator transmits and receives messages, or any other device for originating and receiving messages. Block 100 is connected to a modem/radio controller 104 which receives time of day information from a block 106 entitled "TOD Subsystem". Block 100 is also connected to a receive signal measurement/storage block 108 which receives signals and provides storage of the measurements made until the stored information is to be used or transmitted to other nodes. Block 104 is connected to a transceiver block 110 which provides signals to a power amplifier 112. Power amplifier 112 is connected to an antenna 114 for transmission of messages or reception of messages from other nodes.

Figure 9 provides a high level flow diagram of the operation of the block 100 of Figure 8 wherein upon start-up for communication between any given pair of nodes, the apparatus goes from a start-up block 120 to a block 122, clearing a working frequency database of any prior information. The apparatus then goes to block 124 where the traffic frequency is set to some predicted value (if predictive values are to be used), and then the system proceeds to block 126 to choose probe and traffic frequencies. If the system is in a start-up condition, the traffic frequency is already set by block 124, and the probe frequencies are derived from a known time-related list of probe frequencies comprising part of an internal algorithm. The adaptive nature of the system allows the probe frequencies and the traffic frequencies to change, thus the choosing in block 126 is a continually changing operation.

In decision block 128, the system ascertains whether the next time slot for communications with a given node is to be a transmit or receive time slot. If it is a transmit time slot, the apparatus continues to block 130, and builds a transmit packet including information relating to the node's newest addition to the set of traffic frequencies. It also includes an acknowledgement of the neighbor's last announced addition to the set of traffic frequencies. It further includes a summary of the receive quality of each frequency in the present node's set of traffic frequencies, and finally, includes a flag indicating whether or not the node is in a start-up state. This packet of information relating to protocol is transmitted twice, once on the probe frequency and once on the transmit frequency, in accordance with block 132. When transmitting at the probe frequency, a long preamble is used, and on the traffic frequency, a short preamble is used with the remaining time allocated to user data. As previously indicated, however, in Figure 3, the traffic frequency uses a long preamble in the start-up condition.

If the decision in block 128 is that it is a receive time slot, the system proceeds to block 134, where if either a probe or traffic packet or both are successfully received, the frequency or frequencies are added to the working frequency database. The protocol information received in either one or both packets is processed, and based upon the analysis of the data, or the information in the packet, frequencies are added to or replaced in the set of traffic frequencies in the working frequency database. Further, any user data obtained in the traffic packet is passed to a higher level protocol for transmission to the end user controller represented by block 100 and storage 108 in Figure 8. After completing the steps of block 134, the system proceeds to a decision block 136 where it checks to see whether the neighbor announced that it is in a start-up state. If so, the system returns to block 124 to set the traffic frequency to a predicted value, but if the neighbor is not in the start-up state, control returns to block 126 to choose the next probe and traffic frequencies.

In the prior art system of the patent referenced previously, the protocol comprised a minor cycle occurring every 48 seconds having four two-second emergency slots and eight five-second transmit or receive intervals divided into two and one-half second packets, as in the present invention. After a number of frequencies were checked and connection was made, the full five seconds, less preamble time, was devoted to traffic. From time to time after link up, the probe was reintroduced to update the knowledge of useable frequencies.

The system of the present invention is generally faster to link up than the prior art system. In addition, it is more stable in operation, since it is more adaptive to changing propagation characteristics. Most applications of the present concept rate a robust system much higher on a value scale than volume of traffic at any given time. If there is an emergency where large volumes of traffic data need to be transmitted for a short period of time, the five-second time slot can be dedicated to traffic on an exceptional basis, modifying either the traffic preamble or the data in the P&T control data portion of the slot so that the receiver knows that the data will pre-empt the succeeding probe portion of the time slot.

With the system normally operating in accordance with the data format of block 56 of Figure 3, the system is continually checking the signal quality of both the traffic data and the probe signals, and as soon as a new frequency signal is received with a signal-to-noise ratio indicating better propagation, the system is modified to operate at the new frequency. The totality of signal quality information stored in block 108 of Figure 8 is utilized by the intelligent maintenance module portion of block 100 to determine which frequencies should be used by the traffic signals and in what order. The intelligent maintenance module also is the source of instructions for attempting new probe frequencies outside the predetermined library of probe frequencies.

The measurements of the receive characteristics of the traffic and probe packets of information may be stored in a database that forms a propagation history of every frequency successfully received. Measurements of signal-to-noise ratio (SNR) and cyclic redundancy code (CRC) error check are used by the intelligent maintenance module 100 of Figure 8 to constantly select the best working frequencies. Measurements of TOA (time of arrival) and automatic gain control (AGC) setting are used to maximize the receiver's chance of acquiring synchronization with the signal on any particular frequency. By using a weighted signal-to-noise ratio value where newer samples are given a heavier weight, the intelligent maintenance module can provide a realistic selection of which signal to choose next upon detection of the degradation of a given traffic frequency.

The CRC measurement is used to detect data errors induced during the transmission. If errors are detected, the data portion of that particular traffic packet is ignored. The CRC measurement is also factored into the weighted signal-to-noise ratio average used to select the best working frequencies. Thus, a CRC error on a received packet for a particular frequency lowers the weighted signal-to-noise ratio average for that frequency.

The TOA is a relative measure of propagation delay and can be an indicator of the propagation mode. In other words, which ionospheric support layer was used and how many hops the signal traversed enters into the time of arrival. Once the TOA has been measured using a long preamble for a particular frequency, the search algorithm in the receiver can be seeded with this value to shorten the time it takes for the acquisition of synchronization on that frequency, thereby allowing the use of a shorter preamble such as shown in block 56 of Figure 3 wherein the traffic packet has room for user data capacity in addition to the P&T control data.

The present invention also provides the capability of examining the quality of received signals and adjusting the data rate downward when the signal-to-noise ratio indicates poor signal quality or upward when the quality is high. In addition or in substitution thereof, the power can be increased when the signal-to-noise ratio is poor or reduced when the signal-to-noise ratio rises. The reduction in power provides a benefit in using less power at each node if it is battery operated, or provides less interference to other nearby nodes and reduces the possibility of reception by unauthorized receivers.

Once the intelligent maintenance module in block 100 of Figure 8 has chosen a frequency as part of its order wire pair, information to establish that frequency is included in the P&T control data portion of all traffic and probe slots to its neighbor node. This P&T packet includes the frequency being confirmed and an order wire index specifying which of several order wire reception frequencies is being replaced, with the possibility of setting more than one or all order wire reception frequencies to the same frequency.

The intelligent maintenance module 100 then monitors the status of the frequency confirmation process to know when it is safe to make another selection. Under ideal conditions a node can change a receive frequency every P&T cycle. Its "announce-and-do" frequency change protocol is an implementation of a more general protocol designated as a "Reciprocal Parameter Change" (RPC) protocol. The RPC protocol is used to establish parameters that must be know at both ends of a link before they will work. The present protocol algorithm in effect states that any new parameter becomes effective immediately, and the node will continue announcing the parameter until it is ready to change to another.

In one alternate embodiment of the invention, the rate of occurrence of the probe dynamically or permanently reduced so as to provide more slots for user traffic data. In this embodiment, the system may complete a probe set, such as 48 different frequency bands, and then announce (using the control data section of the P&T transmissions) to each neighbor independently an indication of the frequency of probe transmissions desired.

A second alternate embodiment approach is to turn off probing entirely at some point after an adequate number of traffic frequencies have been selected and are being successfully used. As one or more of the traffic channel frequencies show degradation, a bit can be set in the control data portion of the traffic packet to inform the other node that probing is being temporarily resumed. The degradation, depending upon environmental conditions, may take several hours or a few minutes, depending upon time of day and overall propagation conditions. The nodes can then immediately start transmitting probes again. Since both ends of a given link monitor the probe set frequencies in the probe slots after turning off the probes, either end can start retransmitting at any time and expect to be heard. The resumption of probing may be continued until satisfactory new traffic frequencies are found and the requesting node sets a bit to stop probing again.

We have described a communications approach for establishing communication between two transceivers in an environment where signal propagation characteristics vary widely and thus, the two transceivers must continually check the characteristics of the environment via an analysis of received signals and adapt the frequencies used by traffic data as the environment changes. A normal use of this concept would be in a network of nodes wherein data is typically transmitted from node to node as part of a relay system in getting information from one user to another user. The approach very basically uses an approach wherein normally there are maintenance functions of some type on every transmission and there will be probing of various frequencies in the available frequency spectrum to adaptively set the system traffic frequencies to the best available frequency at that moment in time. Time efficiency of start-up is enhanced by permitting synchronization to start in any minor cycle rather than waiting for a prescribed time, by using predictive frequencies in addition to a library of frequencies where the predictive frequency is based upon some type of experience algorithm, and by placing the probe frequencies in groups so that the probe process quickly covers the available band in discrete, but broad, jumps. Once link-up is established, the data rate and/or power of transmission may be modified in accordance with the quality of signal transmissions received to optimize the data rate or other appropriate data signal reception characteristics.

We do not limit our invention to the embodiment illustrated and described but only by the scope of the appended claims wherein we claim:

## Claims

1. A method of maintaining communication, including the use of suitable transmission frequencies, between two transceivers having assigned time slots for transmitting and receiving signals to and from each other on a time multiplexed basis, with the receiving and transmitting time slots each being comprised of two possibly separate portions, said method comprising the steps of:
establishing a common time base at the transceivers;
after link-up of the transceivers, periodically transmitting from a first one of the transceivers a traffic signal, having user data, in a traffic portion of the transmitting time slot, and a probe signal in a probe portion of the transmitting time slot, with the transmission frequencies of the traffic and probe signals usually being different;
receiving the traffic and probe signals at the second of the transceivers, in corresponding receiving time slot portions;
analyzing, at the second transceiver, the signal quality of received traffic and probe signals and determining whether the transmission frequency of the received probe signal is suitable for transmission from the first transceiver to the second and possibly superior to the traffic signal frequency; and
changing the transmission frequency of the probe signal, to explore additional frequencies suitable for transmission.

2. The method of claim 1, further including the following steps for establishing communication, prior to link-up:
periodically transmitting link-up probe signals from the first transceiver in the transmitting time slot at transmission frequencies according to a frequency-time arrangement known to both transceivers;
receiving the link-up probe signals at the second transceiver in a corresponding receiving time slot;
analyzing, at the second transceiver, the signal quality of signals received in the receiving time slot and identifying the transmission frequency of the first of the analyzed signals to meet a minimum quality standard;
transmitting an indication of the identified frequency from the second transceiver to the first; and
attempting reception, at the second transceiver, of signals from the first transceiver, at the identified frequency, without waiting for an acknowledgement from the first transceiver of the indication of the identified frequency.

3. The method of claim 2, further including the following steps for attempting faster link-up:
predicting, at both of the transceivers, frequencies to be effective for transmission from the first transceiver to the second at the time of attempting link-up;
prior to link-up, transmitting a signal at one of the predicted frequencies, from the first transceiver, in the traffic portion of a transmitting time slot;
receiving the predicted frequency signal at the second transceiver in a corresponding receiving time slot;
analyzing, at the second transceiver, the signal quality of the received predicted frequency signal and determining whether the predicted frequency is suitable for transmission from the first transceiver to the second; and
if a suitable traffic transmission frequency has not been identified from the received link-up probe signals and predicted frequency signals, then transmitting a signal at another one of the predicted frequencies, from the first transceiver, in the traffic portion of a transmitting time slot.

4. The method of claim 1, further including the following steps for efficiently implementing the use of a transmission frequency:
deciding at the second transceiver to receive transmissions from the first transceiver on a particular frequency, based on the quality analysis of the received signals;
upon the decision to use the particular frequency, transmitting an identification of the particular frequency from the second transceiver to the first; and
attempting reception of signals at the second transceiver from the first transceiver, at the particular frequency, without waiting for an acknowledgement from the first transceiver of the identification of the particular frequency.

5. The method of claim 4, wherein
after the decision to use the particular frequency, said identification of the frequency is transmitted during both portions of the next time slot for transmitting from the second transceiver to the first;
said reception of signals at the particular frequency is attempted during the next time slot for receiving at the second transceiver from the first;
the transmission of the frequency identification is repeated until an acknowledgement of the frequency identification is received at the second transceiver from the first transceiver;
whereby delay in implementing the particular frequency may be minimized.

6. The method of claim 1, further including the steps of:
transmitting, from the second transceiver to the first, an indication of the quality of the signal received by the second transceiver; and
upon the signal quality being adequate to do so, increasing the data rate of or lowering the power of the transmission from the first transceiver to the second.

7. The method of claim 1, further including the step of:
after link-up of the transceivers, interleaving multiple suitable traffic transmission frequencies, each in a different one of the transmitting time slots.

8. A system for maintaining communication, including the use of suitable transmission frequencies, between two transceivers having assigned time slots for transmitting and receiving signals to and from each other on a time multiplexed basis, with the receiving and transmitting time slots each being comprised of two possibly separate portions, said system comprising:
means for establishing a common time base for the transmitting and receiving time slots at the transceivers;
means at a first one of the transceivers for periodically transmitting, after link-up of the transceivers, a traffic signal having user data, in a traffic portion of the transmitting time slot, and a probe signal in a probe portion of the transmitting time slot, with the transmission frequencies of the traffic and probe signals usually being different;
means at the second of the transceivers for receiving the traffic and probe signals in corresponding receiving time slot portions;
means at the second transceiver for analyzing the signal quality of the received traffic and probe signals and determining whether the transmission frequency of the received probe signal is suitable for transmission from the first transceiver to the second and possibly superior to the traffic signal frequency; and
means at the first transceiver for changing the transmission frequency of the probe signal, to explore additional frequencies suitable for transmission.

9. The system of claim 8, further including the following apparatus for establishing communication, prior to link-up:
means at the first transceiver for transmitting periodically, prior to link-up, link-up probe signals in the transmitting time slot at transmission frequencies according to a frequency-time arrangement known to both transceivers;
means at the second transceiver for receiving the link-up probe signals in a corresponding receiving time slot;
means at the second transceiver for analyzing the signal quality of signals received in the receiving time slot and for identifying the transmission frequency of the first of the analyzed signals to meet a minimum quality standard;
means at the second transceiver for transmitting an indication of the identified frequency to the first transceiver; and
means at the second transceiver for attempting reception of signals from the first transceiver at the identified frequency, without waiting for an acknowledgement from the first transceiver of the indication of the identified frequency.

10. The system of claim 8, further including the following apparatus for effecting the use of a transmission frequency:
means at the second transceiver, responsive to the quality analysis of the received signals, for deciding to receive transmissions from the first transceiver on a particular frequency;
means, responsive to the decision to use the particular frequency, for transmitting an identification of the particular frequency from the second transceiver to the first; and
means for attempting reception of traffic signals at the second transceiver from the first transceiver, at the particular frequency, without waiting for an acknowledgement from the first transceiver of the identification of the particular frequency.
